Europäisches Patentamt

(19) European Patent Office

Office européen des brevets

(11) Publication number: **0 043 872**

**A1**

# (12) EUROPEAN PATENT APPLICATION

(21) Application number: **80200677.5**

(22) Date of filing: **10.07.80**

(51) Int. Cl.³: **F 03 D 7/02**

(43) Date of publication of application:
**20.01.82 Bulletin 82/3**

(84) Designated Contracting States:
**AT BE CH DE FR GB IT LI LU NL SE**

(71) Applicant: **Hayen, Paul**
**Eynestraat, 23**
**B-3813 Zepperen(BE)**

(71) Applicant: **Hayen, Jos**
**Stokstraat**
**B-3813 Zepperen(BE)**

(72) Inventor: **Hayen, Paul**
**Eynestraat, 23**
**B-3813 Zepperen(BE)**

(72) Inventor: **Hayen, Jos**
**Stokstraat**
**B-3813 Zepperen(BE)**

(74) Representative: **Pirson, Jean et al,**
**c/o Bureau Gevers 7, rue de Livourne, Boîte no 1**
**B-1050 Bruxelles(BE)**

(54) **Pitch regulation device for the rotor vanes of a windmill.**

(57) A windmill has a device for influencing the directing of the vanes (1) thereof, wherefor each vane is mounted on a rotatable shaft (2), said device being comprised for each rotatable shaft, of an arm (21) made fast at right angle to said shaft and subjected to the centrifugal force, whereby means are provided to slow-down progressively that rotation of said shaft caused by said arm rotating.

Fig. 1

EP 0 043 872 A1

."WINDMILL HAVING A DEVICE INFLUENCING THE VANE
DIRECTING".

--------------------------------------------------

This invention pertains to a windmill having
a device for influencing the directing of the vanes
thereof, whereby each vane is mounted on a rotatable
shaft.

In a windmill of the above-defined type,
the vanes should take an optimum position which is
dependent on the wind speed and the revolution speed
of the vanes proper. It is thus essential that with
high wind speeds, a determined revolution number not
be exceeded.

The invention has for object to provide
a windmill which is fitted with a device which
automatically limits with technically simple and
functionally reliable means, the windmill speed or
the revolution number per minute of the vanes.

According to the invention, the above object
is obtained due to said device being comprised for
each rotatable shaft, of an arm made fast at right angle
to said shaft and subjected to the centrifugal force,
whereby means are provided to slow-down progressively
that rotation of said shaft caused by said arm rotating.

Advantageously, said means are comprised
for each rotatable shaft, of a second arm which is
eccentrically mounted with the one end thereof relative
to said rotatable shaft and is connected with the
other end thereof, to a sliding piece movable under
the action of at least one spring, which is moved
against the action of a spring along a guide which is
made fast at right angle in the extension of the
windmill main shaft, to a disc made fast at right angle to said shaft and centrally thereto.

A feature of the invention lies in said spring being comprised of a light spring and a heavier spring, and between both said springs mounted in the extension of one another on said guide, is provided a bush with stop collar against which said sliding piece can press when said light spring is displaced by the sliding piece under the action of said second arm, in the direction of said stop collar.

Other details and features of the invention will stand out from the following description, given by way of non limitative example and with reference to the accompanying drawings, in which :

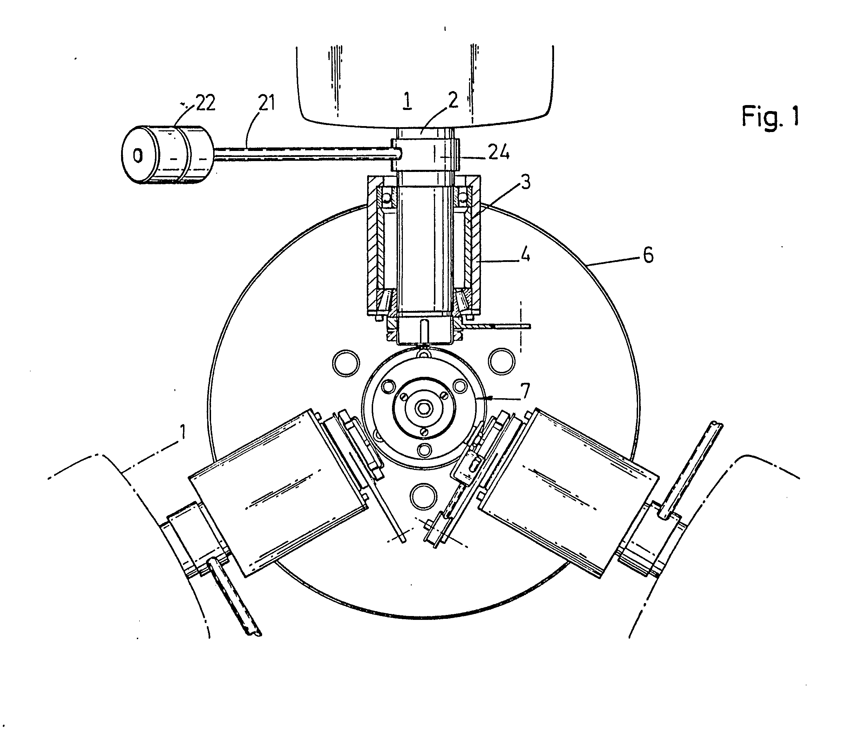

Figure 1 is a front view with part section, of the disc mounted on the windmill main shaft, disc to which the bearings for the vane rotatable shafts are made fast.

Figure 2 is partly a lengthwise cross-section and partly a side view of the device, only those parts pertaining to the directing of but one rotatable shaft having been shown.

The device for directing the vanes will be described with reference to the drawings in an embodiment whereby three vanes are preferably fitted in the windmill or wind turbine according to the invention.

Each vane 1 lies on a shaft 2 which is mounted in a ball bearing 3 which is in turn fast in a square or rectangular holder 4 which is fastened with a screw bolt 5 to a disc 6. Said disc 6 is connected in the center thereof to the main windmill shaft 7. In the extension of said main shaft 7 is provided a guide 8 for springs 9 and IO which are mounted in the extension of one another around guide 8. Swinging stop members 11 and 2 are adjust= ably mounted on the respective ends of guide 8. The adjusting of said stop members 11 and 12 is made by means of nuts and locking nuts 13-14 and 15-16 respectively.

Said springs 9 and 0 do not exert the same pressure. A bush 7 provided with stop collar 8, is arranged between both springs.

Along that side of disc 6 removed from guide 8, a sliding piece 19 is arranged on collar 12' from stop member 12. Said sliding piece is clamped between said collar 12' and nut I5.

Said sliding piece 19 which is preferably of disc-shape, is provided with a number of, prefe= rably three pins 20 which are adjustable in the lengthwise direction thereof and press against stop collar 8 when said sliding piece 19 is moved in the direction of disc 6.

The conditions in which said sliding piece moves in the direction of disc 6 will be defined hereinafter.

On said rotatable shaft 2 bearing vane is clamped an arm 21 having at the one end thereof a weight 22. The angle which said arm 21 subjected to the action of the centrifugal force forms relative for example to the plane of disc 6, is adjustable. The adjustment of said angle is performed by loosening and tightening bolt 23 running through ring 24.

On that end of shaft 2 opposite ball bearing 3, to said shaft 2 is made fast a flanged part 27 on which is provided a ball 26 which    forms the one component of the ball fitting with which the so-called second arm 28 is connected with the one end thereof.

The other end of said second arm 28 is screwed tight in an element 29 from a ball hinge connection the head 30 of which is screwed sideways in sliding piece 19.

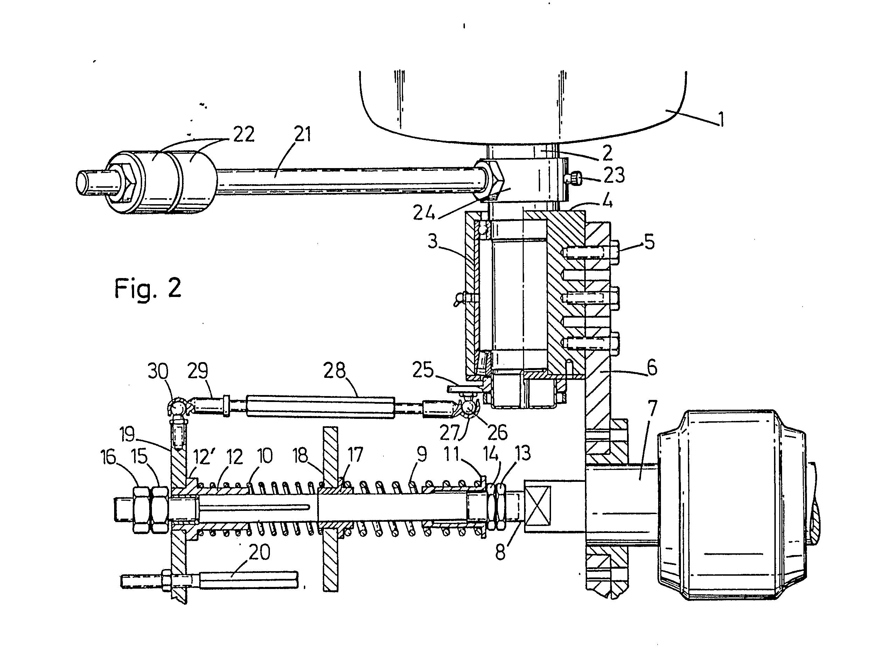

There thus appears from the above descrip‧‧ tion that with a rotating of shaft 2 due for instance to a rotating of arm 21 caused by the centrifugal force, there also results a rotating of the eccentri= cally-mounted ball 26 from said ball fitting. With such a rotating of the ball 26 mounted on flanged part 25, said sliding piece is displaced from the position shown in figure 2, along guide 8 in the direction of disc 6.

With such a displacement, the pins 20 contact the stop collar 18. With a further rotating in the same direction, both of arm 21 and flanged part 25 with ball 26, said stop collar 18 will compress progressively through bush 17, said heavier spring 9.

This means that the rotating of vane 1 resulting from the rotating of said shaft 2 due to a rotating of arm 21, will be progressively slowed-down as the sliding piece which moves in the direction of disc 6 axially along said guide 8, will first meet the resistance from light spring  0 and then only the resistance from heavier spring 9.

When as in the example considered, three vanes are rotatingly mounted on disc 6, there should naturally be provided with three arms 28 acting on sliding piece 19, for an uniform slowing-down of the rotating of shaft 2 with said vane 1 fastened thereto.

The above-described device thus makes possible with too high an increase in the windmill speed, to influence simultaneously each one of those rotatable shafts the vanes are mounted on, or to adjust said vanes at such an angle to the wind direction that the windmill or wind turbine speed automatically decreases.

With an increase in the wind speed, the revolutions per minute of the disc increase and the same is true of the vane speed in the same ration, while the centrifugal speed acts on the arms $2^1$ with weight 22 and brings the vanes 1 by rotating said shafts 2, in such a position that a balance is reached between the wind speed and the centrifugal force acting on arm 21.

By a suitable selection of springs 9 and 10, said vanes 1 always tend towards the ideal angle. It is however very difficult in practice. The problems which rise when selecting the suitable springs can be obviated due to the adjustability of arm $2^1$ relative for exemple to the plane formed by a disc 6.

By adjusting said weights 22, it is also possible to adjust the influence of the centrifugal force on the rotating of shaft 2 and thus also of vane 1.

When the revolution number of disc 6 is too high, the centrifugal force acting on arm 21 will become stronger than the opposing force of the springs. When said springs are compressed, the vane is rotated past 225° in such a way that it forms a negative angle whereby the rotating speed of disc 6 decreases immediately. Due to said speed decreasing, the centrifugal speed is also lowered and the arm 21 returns to the original position thereof in such a way that a following cycle can begin.

The stabilizing of the rotating speed of disc 6 is obtained in the above-described way with very simple mechanical means.

It must be understood that the invention is no way limited to the above embodiments and that many changes can be brought therein without departing from the scope of the invention as defined by the appended claims.

CLAIMS

------

1. Windmill having a device for influencing the directing of the vanes thereof, wherefor each vane is mounted on a rotatable shaft, in which said device is comprised for each rotatable shaft, of an arm made fast at right angle to said shaft and subjected to the centri= fugal force, whereby means are provided to slow-down progressively that rotation of said shaft caused by said arm rotating.

2. Windmill as defined in claim 1, in which said means are comprised for each rotatable shaft, of a second arm which is eccentrically mounted with the one end thereof relative to said rotatable shaft and is connected with the other end thereof, to a sliding piece movable under the action of at least one spring, which is moved against the action of a spring along a guide which is made fast at right angle in the extension of the windmill main shaft, to a disc made fast at right angle to said shaft and centrally thereto.

3. Windmill as defined in claim 2, in which said spring is comprised of a light spring and a heavier spring, and between both said springs mounted in the extension of one another on said guide, is provided a bush with stop collar against which said sliding piece can press when said light spring is displaced by the sliding piece under the action of said second arm, in the direction of said stop collar.

4. Windmill as defined in claim 3, in which on said guide is first mounted a light spring and then a heavier spring as considered in the movement direction of said sliding piece relative to said guide.

5. Windmill as defined in any one of claims 1 to 4, in which said sliding piece is provided with a number of adjustable pins, preferably one pin per vane, which contact said stop collar when said sliding piece is displaced.

6. Windmill as defined in any one of claims 1 to 5, in which the pressure from said springs is adjustable by means of adjustable stop members arranged on said guide.

7. Windmill as defined in any one of claims 2 to 6, in which each second arm is hingedly fastened on the one hand to said sliding piece and on the other hand to an eccentric point from a flanged part made fast to said rotatable shaft.

8. Windmill as defined in claim 7, in which said arm is connected by means of a ball fitting to said sliding piece and to said eccentric point pertaining to said flanged part.

9. Windmill as defined in any one of claims 1 to 8, in which said rotatable shaft is supported in a bush which is made fast to said disc.

10. Windmill as defined in any one of claims 1 to 9, in which said arm subjected to the centrifugal force is fitted with a weight which is adjustable along said arm.

11. Windmill as defined in any one of claims 1 to 10, in which that angle formed by said arm subjected to the centrifugal force with the corresponding vane, is adjustable.

---

Fig. 1

Fig. 2

European Patent Office

**EUROPEAN SEARCH REPORT**

EP 80 20 0677

| Category | Citation of document with indication, where appropriate, of relevant passages | Relevant to claim |
|---|---|---|
| | | |
| | <u>CH - A - 230 132</u> (MARANTA) | 1-4 |
| |   * Page 1, line 28 - page 2, line 89 * | |
| | -- | |
| | <u>FR - A - 1 117 788</u> (SOC. D'ETUDES DES PROCEDES CHEVREAU & DEVILLE) | 2,3,5 |
| |   * Page 1, right-hand column, line 25 - page 2, right-hand column, line 10 * | |
| | -- | |
| | <u>FR - A - 1 553 046</u> (AEROWATT) | 1,3,4 |
| |   * Page 2, right-hand column, lines 12-37 * | |
| | ---- | |

**DOCUMENTS CONSIDERED TO BE RELEVANT**

**CLASSIFICATION OF THE APPLICATION (Int. Cl. 3)**

F 03 D 7/02

**TECHNICAL FIELDS SEARCHED (Int.Cl. 3)**

F 03 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-09-1980 | DE WINTER |

EPO Form 1503.1  06.78